# EUROPEAN PATENT APPLICATION

(11) **EP 3 453 599 A1**
(43) Date of publication of application: **13.03.2019**
(21) Application number: 18192940.7
(22) Date of filing: 06.09.2018
(51) Int. Cl.: B62H 5/06

(54) **SMART HANDLEBAR OF RENTAL BICYCLE**

(30) Priority: 07.09.2017 TW 10630699
(71) Applicant: Microprogram Information Co., Ltd., 407 Taichung City (TW)
(72) Inventor: WU, Teng-Yen, 407 Taichung City (TW)
(74) Representative: Cabinet Chaillot

(57) **Abstract**

A smart handlebar of a rental bicycle (10) includes a handlebar (12) and a controlling apparatus (60). The controlling apparatus (60) is connected to the handlebar (12), and has a processor (66), to which a display (62), a reader module (70), a code generating module (68), a transceiver module (72), and a positioning module (74) are electrically connected. The code generating module (68) generates a rental code (76) shown on the display (74) to be scanned by a mobile device (78). The reader module (70) detects and reads a tag device (80) to generate a rental signal accordingly. The positioning module (74) determines a location of the rental bicycle (10) and generates a bicycle location data accordingly. The transceiver module (72) transmits a rental signal to a control system (40), and receives a control signal from the control system (40). The rental bicycle (10) can be rented by either the mobile device (78) or the tag device (80).

## Description

### BACKGROUND OF THE INVENTION

### 1. Technical Field

The present invention relates to a bicycle rental system, and more particularly to a smart handlebar of a rental bicycle for a bicycle rental system.

### 2. Description of Related Art

A conventional bicycle rental system sets up a plurality of rental stations in the city. Each of the rental stations has a plurality of docks to park bicycle, and people may operate the dock to rent or return a bicycle. A power line and a network should be connected to all the docks for the rental procedure. Such rental system has advantages, including easy management of the system and the bicycles. But it also has some disadvantages, for example, it needs a high cost to build up the rental stations, and the user has to find the rental station to rent and return the rental bicycles.

Another conventional bicycle rental system needs no rental stations. All the rental bicycles have a code. The user operates a mobile device, such as smartphone, which is installed with a specific APP, to scan the code on the rental bicycle for renting and returning the rental bicycle. Such system has some advantages, such as the user may rent the return bicycles in any place, and some disadvantages, such as the rental bicycle will not be operated when the code is damaged.

These two conventional bicycle rental systems have their own advantages and disadvantages. The main difference is that the first bicycle rental system needs fixed power line and network, and the second first bicycle rental system needs internet.

### BRIEF SUMMARY OF THE INVENTION

In view of the above, the primary objective of the present invention is to provide a smart handlebar of a rental bicycle, which may rent a rental bicycle with/without dock.

The secondary objective of the present invention is to provide a smart handlebar of a rental bicycle, which rent and return a rental bicycle according to the user's requirement.

In order to achieve the objective of the present invention, a smart handlebar of a rental bicycle, which is connected to a control system, includes a handlebar and a controlling apparatus provided on the handlebar. The controlling apparatus has a processor, to which a display, a reader module or a code generating module, a transceiver module, and a positioning module are electrically connected. The code generating module generates a rental code shown on the display to be scanned by a mobile device. The reader module detects and reads a tag device to generate a rental signal accordingly. The positioning module determines a location of the rental bicycle and generates a bicycle location data accordingly. The transceiver module transmits a rental signal to a control system, and receives a control signal from the control system.

Since the controlling apparatus is able to connect to internet, the rental bicycle may have the function of the conventional dock. In addition, the rental code is generated every time a user wants to rent the rental bicycle, so that it may overcome the problem of the code is damaged on purpose or by accident.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a sketch diagram of the bicycle rental system of a preferred embodiment of the present invention;
FIG. 2 is a perspective view of the rental bicycle of the preferred embodiment of the present invention;
FIG. 3 is a perspective view of the controlling apparatus on the handlebar of the rental bicycle of the preferred embodiment of the present invention;
FIG. 4 is a block diagram of the controlling apparatus of the preferred embodiment of the present invention;
FIG. 5 is a sketch diagram of bicycle rental system of the preferred embodiment of the present invention;
FIG. 6 is another sketch diagram of bicycle rental system of the preferred embodiment of the present invention; and
FIG. 7 is a sketch diagram of the preferred embodiment of the present invention, showing how to unlock the rental bicycle.

### DETAILED DESCRIPTION OF THE INVENTION

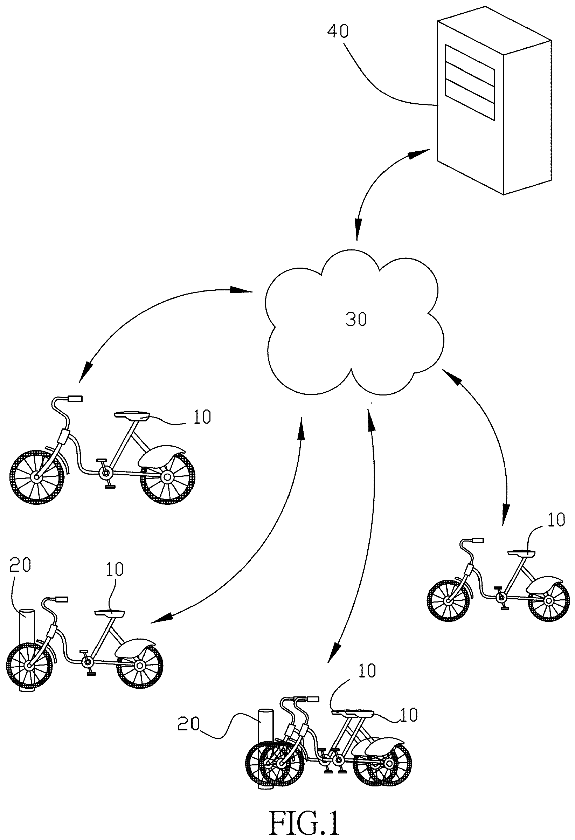

FIG. 1 shows a bicycle rental system of the preferred embodiment of the present invention, which includes a plurality of rental bicycles 10, a plurality of docks 20, a network 30, and a control system 40. It also shows that some of the rental bicycles 10 are rented and returned with the docks 20, and some of them are rented and returned without the docks 20. The docks 20 of the preferred embodiment have no power, network, nor card reading apparatus. The rental bicycles 10 are able to be rent with/without the docks 20.

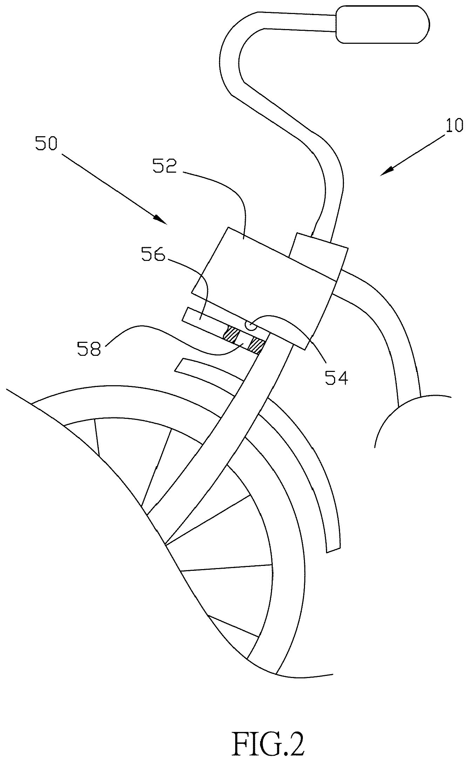

As shown in FIG. 2, each of the rental bicycles 10 has a locking apparatus 50, which includes a locking member 52 and a locking board 56. The locking member 52 has a latch 54, and the locking board 56 has a slot 58. The latch 54 could be moved out of the locking member 52, or received in the locking member 52. The locking member 52 is mounted on a frame of the rental bicycle 10, and precisely, it is mounted on a head tube of the frame of the rental bicycle 10. The locking board 56 is mounted on a front fork of the rental bicycle 10, so that the locking board 56 is turned along with a handlebar of the rental bicycle 10 to align the slot 58 with the latch 54.

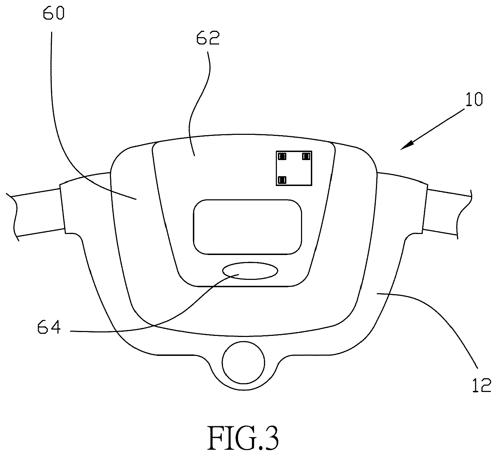

As shown in FIG. 3, the rental bicycle 10 is provided with a controlling apparatus 60 on the handlebar 12 thereof. The controlling apparatus 60 has a display 62 and a key 64. The key 64 is pressed to wake up the controlling apparatus 70 to show information on the display 62.

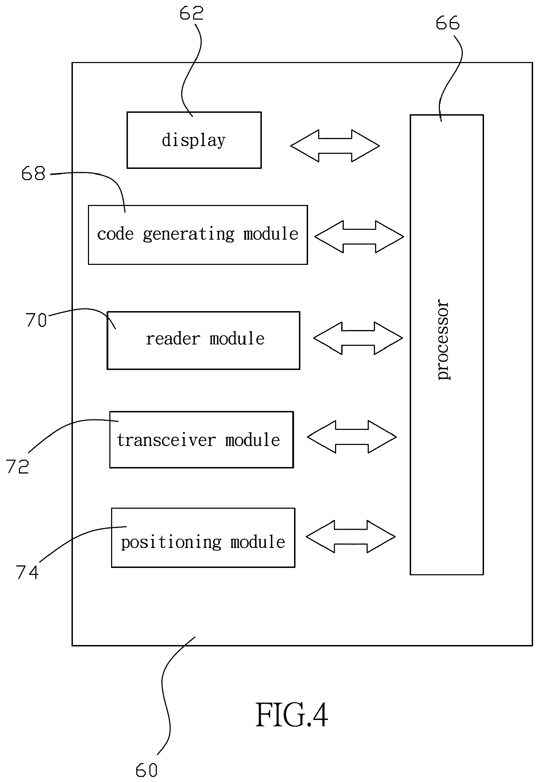

As shown in FIG. 4, the controlling apparatus 60 further includes a processor 66, to which the display 62, a code generating module 68, a reader module 70, a transceiver module 72, and a positioning module 74 are electrically connected. The code generating module 68 is controlled by the processor 76 to generate a rental code, and the rental code is shown in the display 62.

The reader module 70 is a RFID Reader Module to sense and read a tag. The tag could be a RFID tag, a smart card, or an electric ticket.

The transceiver module 72 receives and transmits signals by a wireless transmission, which may be 3G, 4G, Bluetooth, and Zigbee systems. The positioning module 74 is Global Positioning System (GPS).

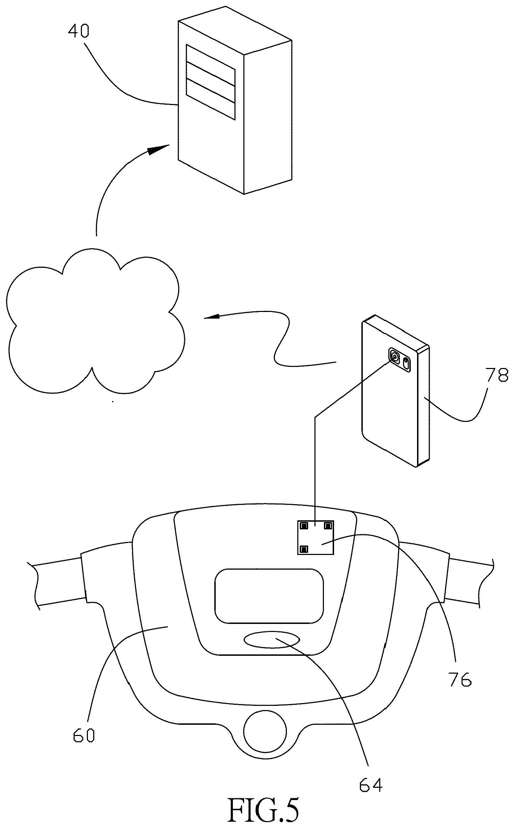

As shown in FIG. 4 and FIG. 5, a user presses the key 64 to wake the controlling apparatus 60 up, and then the code generating module 68 generates a rental code 76 and shows it on the display 62. The rental code includes a rental data, and the rental data includes a serial number of the rental bicycle 10 and a bicycle location data. The user may operate a mobile device 78 to scan the rental code 76. The mobile device 78 is a tablet, a smartphone or the like installed with a specified application. The application decodes the rental code to obtain the serial number of the rental bicycle 10 and the bicycle location data, and then generates a rental signal. The rental signal includes the serial number of the rental bicycle 10, the bicycle location data and a user data, which is pre-stored in the mobile device 78. Next, the rental signal is transmitted from the mobile device 78 to the control system 40 through the network 30 to complete a rental process.

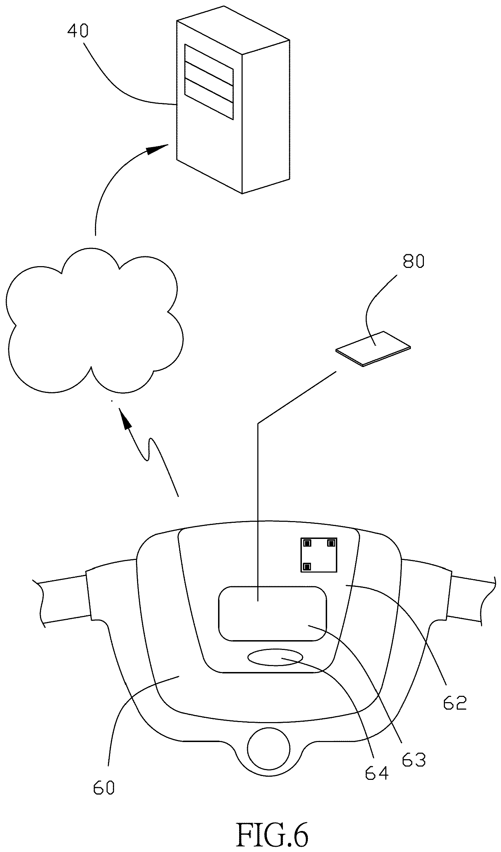

As shown in FIG. 4 and FIG. 6, a user presses the key 64 to wake the controlling apparatus 60 up, and then put a tag device 80 on a sensor area 63 of the controlling apparatus 60. The reader module 70 reads the tag device 80 to generate a rental signal accordingly. The same as above, the rental signal includes the serial number of the rental bicycle 10, the bicycle location data and a user data, which is pre-stored in the controlling apparatus 60. Next, the rental signal is transmitted from the controlling apparatus 60 to the control system 40 through the network 30 to complete a rental process. The tag device 80 may be a smart card, an electric ticket, or a RFID tag.

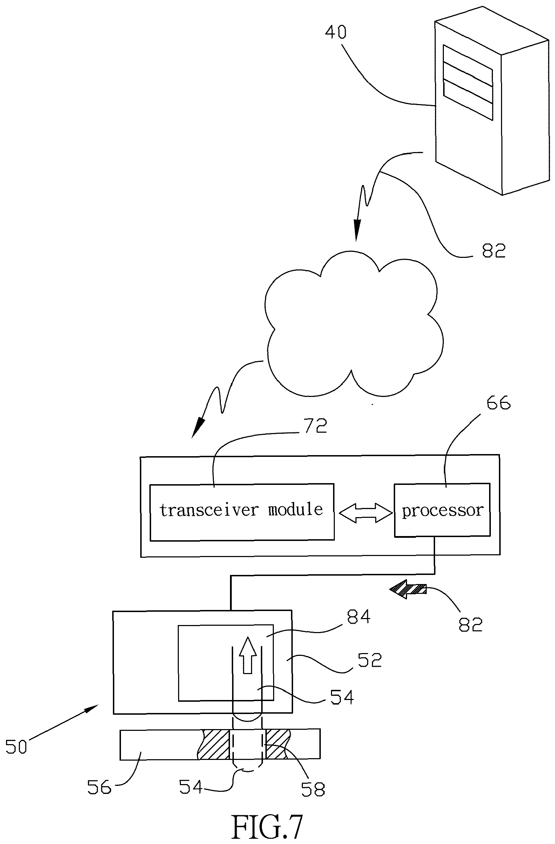

As shown in FIG. 4 and FIG. 7, after receiving the rental signal and determining that the rental signal is correct, the control system 40 transmits a control signal 82 to the rental bicycle 20 through the network 30 to activate the locking apparatus 50 to unlock the rental bicycle 20 that the user is free to ride the rental bicycle 20.

As shown in FIG. 7, the locking apparatus 50 further includes a driving device 84 to move the latch 54. After receiving the control signal 82, the processor 66 commands the driving device 84 to disengage the latch 54 with the slot 58 that the rental bicycle 20 is unlocked.

In conclusion, the smart handlebar of the rental bicycle of the preferred embodiment works with the control system and the locking apparatus of the rental bicycle to let the rental bicycle can be rented and returned with or without the dock. We also provide the rental bicycle being rented by the mobile device and the tag device to make the rental process easier.

It must be pointed out that the embodiments described above are only some preferred embodiments of the present invention. All equivalent structures which employ the concepts disclosed in this specification and the appended claims should fall within the scope of the present invention.

## Claims

1. A smart handlebar of a rental bicycle (10), which is connected to a control system (40), comprising:
a handlebar (12) provided on a rental bicycle (10); and
a controlling apparatus (60) provided on the handlebar (12), and having a processor (66), to which a display (62), a code generating module (68), a transceiver module (72), and a positioning module (74) are electrically connected;
wherein the code generating module (68) generates a rental code (76) shown on the display (62) to be scanned by a mobile device (78); the positioning module (74) determines a location of the rental bicycle (10) and generates a bicycle location data accordingly; and the transceiver module (72) transmits a rental signal to a control system (40), and receives a control signal from the control system (40).

2. A smart handlebar of a rental bicycle (10), which is connected to a control system (40), comprising:
a handlebar (12) provided on a rental bicycle (10); and
a controlling apparatus (60) provided on the handlebar (12), and having a processor (66), to which a display (62), a reader module (70), a transceiver module (72), and a positioning module (74) are electrically connected;
wherein the reader module (70) detects and reads a tag device (80) to generate a rental signal accordingly; the positioning module (74) determines a location of the rental bicycle (10) and generates a bicycle location data accordingly; and the transceiver module (72) transmits the rental signal to a control system (40), and receives a control signal from the control system (40).

3. The smart handlebar of the rental bicycle (10) of claim 1 or 2, wherein the rental bicycle (10) includes a locking apparatus (50); the locking apparatus (50) is connected to the controlling apparatus (60) to be driven by the controlling apparatus (60) to unlock the rental bicycle (10) according to the control signal from the control system (40).

4. The smart handlebar of the rental bicycle (10) of claim 3, wherein the locking apparatus (50) includes a locking member (52) and a locking board (56); the locking member (52) has a movable latch (54), and the locking board (56) has a slot (58); the latch (54) is moved to engage the slot (58) to lock the rental bicycle (10) and is moved to disengage the slot (58) to unlock the rental bicycle (10).

5. The smart handlebar of the rental bicycle (10) of claim 4, wherein the locking apparatus (50) further includes a driving device (84) connected to the latch (54); the driving device (84) is controlled by the controlling apparatus (60) to move the latch (54) to engage and disengage the slot (58).
